# EUROPÄISCHE PATENTSCHRIFT

(11) **EP 3 353 588 B1**
(45) Veröffentlichungstag und Bekanntmachung des Hinweises auf die Patenterteilung: **27.03.2024**
(21) Anmeldenummer: 16760518.7
(22) Anmeldetag: 06.09.2016
(51) Int. Cl.: G02C 7/08, G02B 6/34, G02B 27/01, G02B 6/00

(54) **ANZEIGEVORRICTUNG MIT EINER ABBILDUNGSOPTIK**
DISPLAY APPARATUS COMPRISING AN IMAGING OPTICAL UNIT
DISPOSITIF D'AFFICHAGE POURVU D'UNE OPTIQUE DE REPRODUCTION

(30) Priorität: 25.09.2015 DE 102015116297
(43) Veröffentlichungstag der Anmeldung: 01.08.2018
(73) Patentinhaber: tooz technologies GmbH, 73430 Aalen (DE)
(72) Erfinder: DOBSCHAL, Hans-Jürgen, 99518 Bad Sulza (DE)
(74) Vertreter: Patentanwälte Geyer, Fehners & Partner mbB
(86) Internationale Anmeldenummer: PCT/EP2016/070955
(87) Internationale Veröffentlichungsnummer: WO 2017/050562

(56) Entgegenhaltungen:
- DE-A1-102012 216 581
- DE-B3-102014 207 490
- US-A1- 2004 233 555
- US-B1- 6 384 982
- US-B1- 9 086 569

## Beschreibung

Die vorliegende Erfindung betrifft eine Anzeigevorrichtung mit den Merkmalen des Oberbegriffs des Anspruches 1.

Eine solche Anzeigevorrichtung ist beispielsweise aus der DE 10 2014 207 490 B3 bekannt, wobei die Lichtbündel des Bildes zur Erzeugung eines virtuellen Bildes für einen Benutzer aus dem Brillenglas ausgekoppelt werden. Dieser Brillenglas-Luft-Übergang an der gekrümmten Rückseite führt in unerwünschter Weise zu einem Farbquerfehler. Die US 9 086 569 B1 zeigt eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik, die das erzeugte Bild im auf den Kopf aufgesetzten Zustand der Haltevorrichtung so abbildet, dass es der Benutzer als virtuelles Bild in Überlagerung mit der Umgebung wahrnehmen kann.

Ausgehend hiervon ist es daher Aufgabe der Erfindung, eine alternative Ausgestaltung der Anzeigevorrichtung der eingangs genannten Art bereitzustellen.

Die Erfindung ist im Anspruch 1 definiert. Vorteilhafte Weiterbildungen sind in den abhängigen Ansprüchen angegeben.

Es wird somit durch die unterschiedlichen Materialien für die beiden Abbildungselemente und die Verbindung der beiden Abbildungselemente über die gekrümmte Austrittsfläche ein Achromat bereitgestellt, der die gewünschte Reduzierung des Farbquerfehlers bewirkt.

Das Brillenglas kann negative Brechkraft und das Optikelement kann positive Brechkraft aufweisen und das Brillenglas kann eine kleinere Abbesche Zahl als das Optikelement aufweisen.

Ferner können beide Abbildungselemente aus Kunststoffmaterialien hergestellt sein. Insbesondere können Kunststoffe verwendet werden, die zum Spritzguss geeignet sind.

Das Optikelement kann aus Polycarbonat und das Optikelement kann aus Zeonex, das eine Handelsbezeichnung für ein Cyclo-Olefin-Polymer ist, hergestellt sein.

Die Brechkraft der beiden Abbildungselemente ist bevorzugt so unterschiedlich gewählt und die Dispersion der beiden Abbildungselemente ist so entgegengesetzt gewählt, dass die gewünschte Farbquerfehlerkorrektur erreicht wird. Insbesondere sind die Brechkraft und Materialien der beiden Abbildungselemente so gewählt, dass die Bedingung f₁v₁ = -f₂v₂ erfüllt ist, wobei f₁ und f₂ die Brennweite der beiden Abbildungselemente und v₁ und v₂ die Abbesche Zahl der beiden Abbildungselemente ist.

Die Verbindung des Optikelementes mit dem Brillenglas ist frei von einem Luftspalt. Insbesondere können das Optikelement und das damit verbundene Brillenglas frei von Luftspalten sein.

Die gekrümmte Austrittsfläche des Optikelements kann mit der gekrümmten zweiten Eintrittsfläche des Brillenglases verkittet sein.

Die gekrümmte Austrittsfläche des Optikelements kann eine komplementäre Form zur gekrümmten zweiten Eintrittsfläche des Brillenglases aufweisen.

Insbesondere kann die gekrümmte Austrittsfläche des Optikelements sphärisch gekrümmt sein.

Des Weiteren kann das Optikelement zusammen mit dem Brillenglas L-förmig angeordnet sein.

Das Optikelement kann insbesondere einstückig ausgebildet sein. Es ist jedoch auch möglich, dass es mehrstückig ausgebildet ist und die mehreren Teilstücke in direktem Kontakt miteinander stehen (z.B. verkittet oder verklebt), so dass ein einzelnes Optikelement bereitgestellt ist. Das Optikelement ist insbesondere dadurch gekennzeichnet, dass die Führung des erzeugten Bildes bzw. des entsprechenden Lichtes im Optikelement, das z.B. aus Kunststoff oder Glas gebildet sein kann, ohne etwaige Luftspalte erfolgt.

Die erste Eintrittsfläche des Optikelementes ist bevorzugt plan ausgebildet. Sie kann jedoch alternativ gekrümmt sein.

Des Weiteren kann die Eintrittsfläche als Reflexionsfläche zur Führung des erzeugten Bildes dienen. Die Reflexion kann z.B. mittels innerer Totalreflexion bewirkt werden. Somit kann die Eintrittsfläche transmissiv bei der Einkopplung des erzeugten Bildes und reflektiv bei der Führung der eingekoppelten wirken. Ferner ist es möglich, die Eintrittsfläche teilreflektiv auszubilden (z.B. durch Aufbringen einer geeigneten Reflexionsschicht).

Ferner kann die Austrittsfläche als Reflexionsfläche zur Führung des erzeugten Bildes dienen.

Die Reflexion kann z.B. mittels innerer Totalreflexion bewirkt werden. Somit kann die Austrittsfläche reflektiv bei der Führung des eingekoppelten Bildes und transmissiv bei der Auskopplung des erzeugten Bildes wirken. Ferner ist es möglich, die Austrittsfläche teilreflektiv auszubilden (z.B. durch Aufbringen einer geeigneten Reflexionsschicht).

Ferner können die erste Eintrittsfläche und die Austrittsfläche räumlich zueinander versetzt und um zumindest zwei voneinander unabhängige Raumachsen (bevorzugt um drei voneinander unabhängige Raumachsen) verkippt sein.

Das Optikelement steht mit seiner Austrittsfläche in direktem Kontakt mit der zweiten Eintrittsfläche des Brillenglases. Die beiden Flächen können z.B. verkittet oder verklebt sein. Damit wird eine sehr kompakte Ausbildung der Abbildungsoptik bereitgestellt. Ferner kann somit eine dauerhafte Justierung von Optikelement zu Brillenglas gewährleistet werden.

Durch diese Kontaktierung des Optikelementes mit dem Brillenglas wird ferner vorteilhaft eine Reduzierung von Falsch- bzw. Streulicht erreicht.

Das Optikelement kann zur Führung des erzeugten Bildes zwischen der ersten Eintrittsfläche und der Austrittsfläche keine Reflexion, eine einzige Reflexion oder auch mehrere Reflexionen bewirken. Bevorzugt werden mindestens eine, zwei, drei, vier, fünf Reflexionen bewirkt. Die Anzahl der Reflexionen liegt bevorzugt im Bereich von zwei bis zehn und wird bevorzugt in Abhängigkeit der Position eines Bildgebers des Bilderzeugungsmoduls und der Brennweite der Abbildungsoptik gewählt.

Bei der erfindungsgemäßen Abbildungsoptik können die Grenzflächen des Optikelements, die nicht zur Führung und/oder Ein- oder Auskopplung des erzeugten Bildes dienen, geschwärzt und/oder absorbierend für Licht sein. Damit wird eine gute Streulichtunterdrückung erreicht.

Der Auskoppelabschnitt kann eine abbildende Wirkung aufweisen und kann reflektiv, transmissiv und/oder refraktiv sein.

Das Brillenglas und das Optikelement können jeweils z.B. aus Glas oder Kunststoff hergestellt sein.

Bei der erfindungsgemäßen Abbildungsoptik können das Brillenglas und das Optikelement zusammen, in einer Ansicht von oben gesehen, eine L-Form aufweisen. Insbesondere kann das Optikelement von der Rückseite des Brillenglases vorstehen. Dies kann zu der beschriebenen L-Form führen.

Die Führung des erzeugten Bildes bzw. der Lichtbündel kann im Optikelement durch Reflexionen und/oder innere Totalreflexionen erfolgen und erfolgt im Brillenglas durch Reflexionen und/oder innere Totalreflexionen. Falls die Führung durch Reflexionen bewirkt werden soll, sind eventuell reflektierende Beschichtungen oder reflektierende Flächen vorzusehen. Die Reflexionen können an äußeren Grenzflächen des Brillenglases und/oder des Optikelementes (wie z.B. Vorder- und Rückseite des Brillenglases) und/oder an innen liegenden Flächen bewirkt werden.

Der Auskoppelabschnitt ist von der zweiten Eintrittsfläche lateral beabstandet. Es findet somit stets zumindest eine Reflexion oder mehrere Reflexionen im Brillenglas (z.B. eine Reflexion an der Vorderseite und eine Reflexion an der Rückseite des Brillenglases) zur Führung des erzeugten Bildes nach der Einkopplung in das Brillenglas bis zum Auskoppelabschnitt statt. Der Auskoppelabschnitt ist somit bevorzugt lateral vom Optikelement beabstandet.

Insbesondere kann die eine reflektierende Fläche des Optikelementes als asphärische Fläche ausgebildet sein. Die asphärische Fläche kann insbesondere keine Rotationssymmetrie aufweisen. Insbesondere kann sie als Freiformfläche ausgebildet sein. Unter einer Freiformfläche wird hier insbesondere eine gekrümmte Fläche verstanden, die in zwei unterschiedlichen Hauptschnitten unterschiedliche Krümmungen aufweist und/oder die gekrümmt ist und keine Rotationssymmetrie aufweist.

Auch die anderen reflektierenden Flächen des Optikelementes können jeweils als asphärische Fläche und insbesondere als Freiformfläche ausgebildet sein.

Der Auskoppelabschnitt kann eine oder mehrere reflektive Umlenkflächen aufweisen, die für die Lichtbündel reflektiv oder teilreflektiv sind. Die reflektiven Umlenkflächen können auch als reflektive Facetten bezeichnet werden.

Die reflektiven Umlenkflächen können jeweils plan oder gekrümmt ausgebildet sein. Ferner können die Umlenkflächen fresnelartig eine gekrümmte Reflexionsfläche nachstellen, die neben einer reinen Strahlumlenkung auch eine abbildende Eigenschaft aufweist.

Die reflektiven Umlenkflächen können im Brillenglas vergraben ausgebildet sein. Insbesondere können sie z.B. an der Vorderseite des Brillenglases ausgebildet sein. Sie können so mit Material des Brillenglases aufgefüllt sein, dass die Vorderseite eine glatte, durchgehende Seite ist. Wird mit einem anderen Material als dem des Brillenglases aufgefüllt, so besitzt beiden Materialen vorteilhafterweise einen identischen Brechungsindex.

Die Abbildungsoptik ist so ausgebildet, dass sie das virtuelle Bild so erzeugt, dass es in Überlagerung mit der durch das Brillenglas sichtbaren Umgebung wahrnehmbar ist. Es wird somit eine sogenannte augmentierte Darstellung ermöglicht, bei der das virtuelle Bild dem Benutzer in sein Sichtfeld eingespiegelt wird. Wesentlich dabei ist, dass der Benutzer das Brillenglas in der herkömmlichen Art und Weise weiterhin benutzen kann. Er kann somit die Umgebung durch das Brillenglas wahrnehmen. Somit kann die erfindungsgemäße Anzeigevorrichtung beispielsweise als sogenannte Datenbrille hergestellt sein, bei der das erzeugte Bild z.B. darzustellende Daten enthält.

Das Brillenglas kann eine Brechkraft von Null oder eine von Null verschiedene Brechkraft (insbesondere zur Korrektur von Fehlsichtigkeiten) aufweisen.

Die Haltevorrichtung kann brillenartig ausgebildet sein und einen ersten und zweiten Brillenbügel aufweisen, wobei das Optikelement zumindest teilweise in einem der beiden Brillenbügel angeordnet ist.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Insbesondere kann der Bildgeber ein OLED-, ein LCD-, ein LCoS- und/oder ein DotMatrix-Mikrodisplay aufweisen. Ferner kann der Bildgeber ein LED-Segmentdisplay aufweisen. Des Weiteren kann der Bildgeber ein direkt scannendes Laserdisplaymodul (und eventuell mit einer Optik zum Pupillenmatching) aufweisen. Ferner kann der Bildgeber ein scannendes Laserdisplaymodul mit streuendem Medium in einer Zwischenbildebene vor dem Optikteil oder vor dem Brillenglas und einer Optik zum Pupillenmatching aufweisen. Der Bildgeber kann selbstleuchtend oder nicht selbstleuchtend sein.

Das Bilderzeugungsmodul kann insbesondere so ausgebildet sein, dass mehrfarbiges Bild erzeugt wird.

Die erfindungsgemäße Anzeigevorrichtung kann weitere, dem Fachmann bekannte Elemente aufweisen, die zu ihrem Betrieb notwendig sind.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Haltevorrichtung kann brillenartig ausgebildet sein und einen ersten und zweiten Brillenbügel aufweisen, wobei das Optikelement zumindest teilweise in einem der beiden Brillenbügel angeordnet ist.

Bei der erfindungsgemäßen Anzeigevorrichtung kann die Abbildungsoptik das erzeugte Bild im auf dem Kopf aufgesetzten Zustand der Haltevorrichtung so als virtuelles Bild abbilden, dass es der Benutzer in Überlagerung mit der Umgebung wahrnehmen kann. Es wird somit eine sogenannte augmentierte Darstellung ermöglicht. Der Benutzer kann daher das Brillenglas in herkömmlicher Art und Weise weiterhin benutzen. Insbesondere kann er durch das Brillenglas die Umgebung wahrnehmen. Das Brillenglas kann eine Brechkraft von Null oder eine von Null verschiedene Brechkraft (insbesondere zur Korrektur von Fehlsichtigkeiten) aufweisen.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Insbesondere kann der Bildgeber ein OLED-, ein LCD-, ein LCoS- und/oder ein DotMatrix-Mikrodisplay aufweisen. Ferner kann der Bildgeber ein LED-Segmentdisplay aufweisen. Des Weiteren kann der Bildgeber ein direkt scannendes Laserdisplaymodul (und eventuell mit einer Optik zum Pupillenmatching) aufweisen. Ferner kann der Bildgeber ein scannendes Laserdisplaymodul mit streuendem Medium in einer Zwischenbildebene vor dem Optikteil oder vor dem Brillenglas und einer Optik zum Pupillenmatching aufweisen. Der Bildgeber kann selbstleuchtend oder nicht selbstleuchtend sein.

Das Bilderzeugungsmodul kann insbesondere so ausgebildet sein, dass mehrfarbiges Bild erzeugt wird.

Die erfindungsgemäße Anzeigevorrichtung kann als Datenbrille ausgebildet sein, bei der das erzeugte Bild z.B. darzustellende Daten enthält.

Die erfindungsgemäße Anzeigevorrichtung kann weitere, dem Fachmann bekannte Elemente aufweisen, die zu ihrem Betrieb notwendig sind.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung;
- Fig. 2: eine vergrößerte Teilschnittansicht der Abbildungsoptik einschließlich einer schematischen Darstellung des Bilderzeugungsmoduls;
- Fig. 3: eine vergrößerte Teilschnittansicht der Abbildungsoptik einer weiteren Ausführungsform einschließlich einer schematischen Darstellung des Bilderzeugungsmoduls, und
- Fig. 4: eine vergrößerte Teilschnittansicht der Abbildungsoptik einer weiteren Ausführungsform einschließlich einer schematischen Darstellung des Bilderzeugungsmoduls.

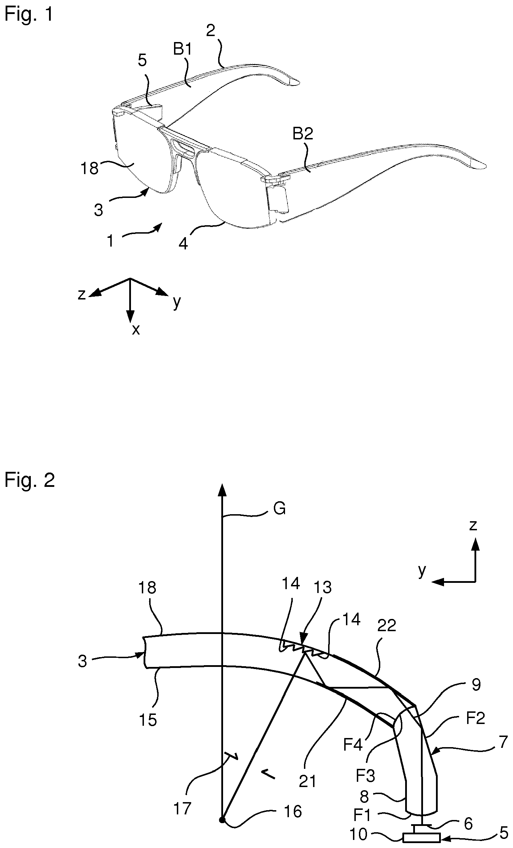

Bei der in Fig. 1 gezeigten Ausführungsform umfasst die erfindungsgemäße Anzeigevorrichtung 1 eine auf den Kopf eines Benutzers aufsetzbare Haltevorrichtung 2, die in der hier beschriebenen Ausführungsform als herkömmliches Brillengestell ausgebildet ist, sowie ein erstes und zweites Brillenglas 3, 4, die an der Haltevorrichtung 2 befestigt sind. Die Haltevorrichtung 2 mit den Brillengläsern 3 und 4 kann z.B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsbild eingespiegelt werden kann, wie nachfolgend beschrieben wird.

Wie am besten aus der vergrößerten perspektivischen Teilansicht in Fig. 2 ersichtlich ist (die Haltevorrichtung 2 ist nicht dargestellt), umfasst die Anzeigevorrichtung 1 ein Bilderzeugungsmodul 5, das einen Bildgeber 6 (z.B. ein OLED-Modul) aufweist, mit dem ein Bild erzeugt werden kann, das als das virtuelle Bild in das Gesichtsfeld des Benutzers eingespiegelt werden soll. Dazu weist die Anzeigevorrichtung 1 eine Abbildungsoptik 7 auf, die ein zwischen dem Bildgeber 6 und dem ersten Brillenglas 3 angeordnetes Optikelement 8 enthält. Des Weiteren dient das erste Brillenglas 3 selbst auch als Teil der Abbildungsoptik 7.

Die Abbildungsoptik 7 ist als solche als erfindungsgemäße Abbildungsoptik 7 ausgebildet und ist bevorzugt für eine auf den Kopf eines Benutzers aufsetzbare und ein Bild erzeugende Anzeigevorrichtung ausgelegt. Die Abbildungsoptik 7 wird hier nur zur Verdeutlichung ihrer erfindungsgemäßen Ausbildung mit der Haltevorrichtung 2 gemäß Fig. 1 beschrieben. Die Abbildungsoptik 7 kann jedoch auch für jede andere Haltevorrichtung ausgelegt werden.

Der Bildgeber 6 ist als flächiger Bildgeber mit einer Vielzahl von z.B. in Spalten und Zeilen angeordneten Pixeln ausgebildet, wobei von jedem Pixel ein Lichtbündel 9 ausgehen kann. Durch eine entsprechende Ansteuerung der Pixel (z.B. mittels einer Steuereinheit 10) kann das gewünschte Bild erzeugt werden. In Fig. 2 ist stellvertretend für die Lichtbündel 9 der Strahlengang eines Lichtstrahles eingezeichnet, so dass nachfolgend auch von dem Lichtstrahl 9 die Rede ist.

Der vom Bildgeber 6 ausgehende Lichtstrahl 9 tritt über eine gekrümmte erste Eintrittsfläche F1 (die alternativ auch plan sein kann) des Optikelementes 8 in das Optikelement 8 ein und trifft auf eine gegenüberliegende plane Reflexionsfläche F2. Der Lichtstrahl 9 wird von der Reflexionsfläche F2 zu einer sphärisch gekrümmten Austrittsfläche F3 reflektiert, die mit einer zur gekrümmten Austrittsfläche F3 komplementär gekrümmten zweiten Eintrittsfläche F4 des ersten Brillenglases 3 verkittet ist.

Über die gekrümmte zweite Eintrittsfläche F4 des ersten Brillenglases 3 tritt der Lichtstrahl 9 in das erste Brillenglas 9 ein und wird in diesem durch Reflexionen an Vorderseite 18 und Rückseite 15 des ersten Brillenglases 3 bis zu einem Auskoppelabschnitt 13 geführt. Der Auskoppelabschnitt 13 weist mehrere nebeneinander angeordnete reflektive Umlenkflächen 14 (die auch als reflektive Facetten bezeichnet werden können) auf, an denen eine Reflexion der Lichtstrahlen 9 in Richtung zur Rückseite 15 des ersten Brillenglases 3 stattfindet, so dass die Lichtstrahlen 9 über die Rückseite 15 aus dem ersten Brillenglas 3 austreten.

Somit kann ein Benutzer, wenn er die erfindungsgemäße Anzeigevorrichtung 1 bestimmungsgemäß auf dem Kopf trägt, das mittels des Bildgebers 6 erzeugte Bild als virtuelles Bild wahrnehmen, wenn er auf den Auskoppelabschnitt 13 blickt. Bei der hier beschriebenen Ausführungsform muss der Benutzer bezogen auf die Blickrichtung G eines Geradeausblicks um ca. 20°-40° nach rechts schauen. In Fig. 2 ist zur Verdeutlichung der Drehpunkt 16 des Auges des Benutzers sowie die Eyebox 17 bzw. die Austrittspupille 17 der Abbildungsoptik eingezeichnet. Die Eyebox 17 ist der Bereich, der durch die Anzeigevorrichtung 1 bereitgestellt wird und in dem sich die Pupille des Auges des Benutzers bewegen kann und er stets noch das erzeugte Bild als virtuelles Bild sehen kann.

Aufgrund der beschriebenen Lichtbündelleitung des Optikelementes 8 kann dieses auch als Lichtleiter 8, insbesondere als bilderhaltender und/oder abbildender Lichtleiter, bezeichnet werden.

Die Facetten 14 könne plan oder gekrümmt ausgebildet sein. Bei einer gekrümmten Ausbildung der Facetten kann der Auskoppelabschnitt 13 insgesamt eine abbildende Wirkung aufweisen.

Die Rückseite 15 des Brillenglases kann sphärisch gekrümmt sein. Ferner kann die Vorderseite 18 des Brillenglases plan oder gekrümmt sein.

Die Krümmung der Flächen F1 bis F4, der Rückseite 15 und/oder der Facetten 14 kann eine sphärische Krümmung, eine asphärische Krümmung oder die Krümmung einer Freiformfläche sein. Unter einer Freiformfläche wird insbesondere eine gekrümmte Fläche verstanden, die in zwei unterschiedlichen Hauptschnitten unterschiedliche Krümmungen aufweist und/oder die gekrümmt ist und keine Rotationssymmetrie aufweist. Insbesondere kann die Freiformkrümmung nicht sphärisch und nicht rotationssymmetrisch sein.

Das Optikelement 8 ist so ausgebildet, dass es in dem rechten Brillenbügel B1 der Haltevorrichtung 2 eingebaut werden kann. Der rechte Brillenbügel B1 dient dann als Gehäuse für das Optikelement 8.

Der Benutzer kann bei aufgesetzter Anzeigevorrichtung die Umgebung durch die Brillengläser 3 und 4 wahrnehmen. Das virtuelle Bild wird ihm somit in Überlagerung mit der Umgebung dargeboten.

Natürlich kann die Anzeigevorrichtung 1 auch so ausgebildet sein, dass die Blickrichtung zur Erfassung des virtuellen Bildes mit der Geradeaus-Blickrichtung G zusammenfällt.

Das Optikelement 8 ist bevorzugt einstückig ausgebildet und kann aus einem Glasmaterial oder einem Kunststoffmaterial hergestellt sein. Auch das erste und zweite Brillenglas 3, 4 kann aus einem Glasmaterial oder einem Kunststoffmaterial hergestellt sein.

Das Optikelement 8 bildet zusammen mit dem ersten Brillenglas 3 das mittels des Bildgebers 6 erzeugte Bild so als virtuelles Bild ab, das der Benutzer wahrnehmen kann. Bei dieser Abbildung treten unerwünschte Farbquerfehler auf (z.B. beim Brillenglas-Luft-Übergang der Lichtbündel an der Rückseite 15). Um diese Farbquerfehler zu verringern, ist die Abbildungsoptik 7 so ausgelegt, dass sie achromatisch wirkt. Dazu sind das erste Brillenglas 3 und die Optikelement 8 aus unterschiedlichen Materialien gebildet, die sich möglichst deutlich durch ihre Abbesche Zahl unterscheiden. Des Weiteren weist das Optikelement 8 für die Abbildung des Bildes eine positive Brechkraft und weist das erste Brillenglas 3 für die Abbildung des Bildes eine negative Brechkraft auf. Zusammen mit der gekrümmten Ausbildung der Austrittsfläche F3 wird gewissermaßen ein abstrakter Achromat bereitgestellt, mit dem die gewünschte Reduzierung des Farbquerfehlers erreicht wird.

Als Material für das erste Brillenglas 3 kann z.B. Polycarbonat mit einer Abbeschen Zahl von 30 und als Material für das Optikelement 8 kann z.B. Zeonex mit einer Abbeschen Zahl von 56 verwendet werden. Diese Materialien sind in vorteilhafter Weise für eine Herstellung mittels Spritzguss geeignet.

Wenn man die Werte von Polycarbonat und Zeonex mit den Werten bekannter optischer Gläser vergleicht, entspricht Zeonex dem Kronglas und Polycarbonat dem Flintglas. Durch die bereits beschriebene Verkittung des Optikelementes 8 mit dem ersten Brillenglas 3 und der Wahl eines geeigneten Radius der sphärischen Austrittsfläche F3 lässt sich für den Fachmann die gewünschte Achromatisierung erreichen. Je näher man die Trennstelle zwischen dem Optikelement 8 und dem ersten Brillenglas 3 (und somit die sphärischen Austrittsfläche F3) in Richtung zum Bildgeber 6 bringt, umso mehr dominiert die Korrektion des Farbquerfehlers über den Farblängsfehler, was aus der klassischen Optik bekannt ist.

Der Farblängsfehler ist hier aufgrund der relativ niedrigen Aperturen nicht so störend und bewegt sich dadurch im Allgemeinen im Tiefenschärfebereich, während der Farbquerfehler aperturunabhängig und doch schon merklich sichtbar ist. Mit der erfindungsgemäßen Abbildungsoptik 7 lässt sich der Farbquerfehler deutlich in den Subpixelbereich verringern und kann rückgerechnet auf den Bereich des Bildgebers 6 z.B. nur noch ca. 1 - 2 µm betragen.

Weiterhin ist zu beachten, dass aufgrund von länderspezifischen Sicherheitsvorschriften im Bereich vor dem Auge des Benutzers teilweise nur bestimmte Materialien zulässig sind. Dazu gehören für Deutschland Polycarbonat, so dass der Einsatz dieses Materials auch unter diesem Aspekt vorteilhaft ist.

Wie in der schematischen Darstellung in Fig. 2 gezeigt ist, ist sowohl die Rückseite 15 als auch die Vorderseite 18 des ersten Brillenglases 3 gekrümmt ausgebildet.

Zur Lichtführung von der zweiten Eintrittsfläche F4 bis zum Auskoppelabschnitt 13 weist das erste Brillenglas 3 zwei gegenüberliegende reflektierende Schichten 21, 22 auf, die sich jeweils von der zweiten Eintrittsfläche F4 bis zum Auskoppelabschnitt 13 erstrecken. Die erste reflektierende Schicht 21 ist auf der Rückseite 15 ausgebildet und die zweite reflektierende Schicht 22 ist auf der Vorderseite 18 ausgebildet. Für die reflektierenden Schichten 21 und 22 kann das gleiche Material verwendet werden wie für die reflektiven Umlenkflächen 14.

Die reflektierenden Schichten 21 und 22 können auch weggelassen werden. In diesem Fall findet die Führung im ersten Brillenglas 3 durch innere Totalreflexion an der Rückseite 15 und der Vorderseite 18 des ersten Brillenglases 3 statt.

Die reflektiven Facetten 14 sind vergraben ausgebildet und bevorzugt so mit Material des Brillenglases 3 aufgefüllt, dass die Vorderseite 18 eine glatte, durchgehende Seite ist. Wird mit einem anderen Material als dem des Brillenglases 3 aufgefüllt, so besitzt beiden Materialen vorteilhafterweise einen identischen Brechungsindex.

Bei dem erfindungsgemäßen Brillenglas 2 kann die Rückseite 15 insbesondere eine Krümmung aufweisen, um eine Fehlsichtigkeitskorrektur zu bewirken. Damit wird in vorteilhafter Weise erreicht, dass auch das dargestellte virtuelle Bild für den Benutzer scharf wahrnehmbar ist, da die Auskopplung der Lichtbündel 9 über die Rückseite 15, die die Korrekturfläche für den Benutzer ist, erfolgt.

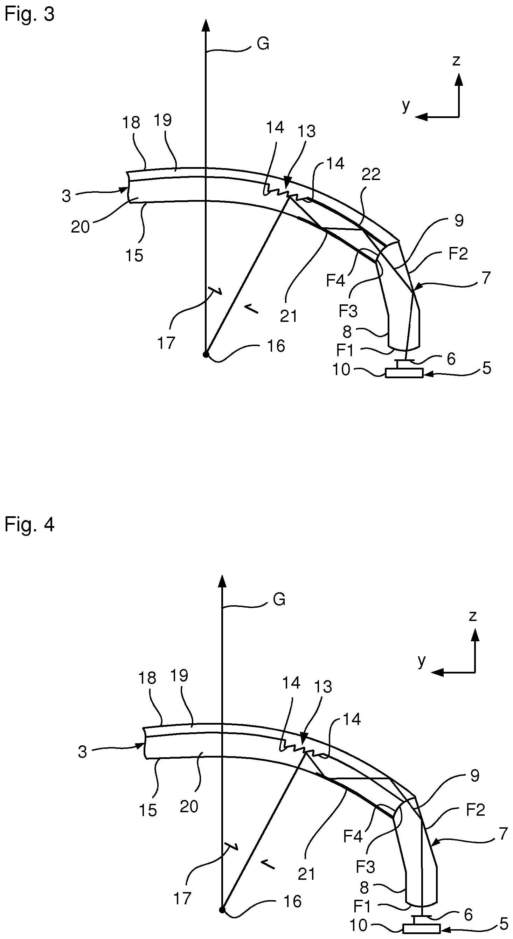

Bei der bisher beschriebenen Ausführungsform war der Aufbau des Brillenglases 3 einschalig. Es ist auch ein zweischaliger Aufbau möglich, wie dies in Fig. 3 gezeigt ist. In diesem Fall umfasst das Brillenglas 3 eine Außenschale 19 sowie eine Innenschale 20. Die reflektierende Schicht 22 ist zwischen der Innen- und Außenschalte 20, 19 ausgebildet.

Ferner kann ein mehr als zweischaliger Aufbau des ersten Brillenglases 3 vorliegen. Beispielsweise kann eine weitere Innenschale vorgesehen sein, die an der Innenschale 20 anliegt. In diesem Fall wären beide reflektierende Schichten 21 und 22 im Brillenglas 3 vergraben.

In Fig. 4 ist eine Abwandlung des erfindungsgemäßen Brillenglases von Fig. 2, wobei bei dieser Abwandlung die zweite reflektierende Schicht 22 nicht vorgesehen ist und stattdessen eine innere Totalreflexion an der Vorderseite 18 stattfindet.

Die Materialien der Innen- und Außenschale 20 und 19 sind bevorzugt gleich, so dass sie einen identischen Brechungsindex aufweisen. Die Innen- und Außenschalle 20 und 19 sind bevorzugt ganzflächig verklebt, so dass ein kompaktes erstes Brillenglas 3 vorliegt.

Bei der erfindungsgemäßen Anzeigevorrichtung 1 erfolgt die Einspiegelung des virtuellen Bildes in das Gesichtsfeld des Benutzers über das erste Brillenglas 3. Natürlich ist auch eine Einspiegelung über das zweite Brillenglas 4 möglich. In diesem Fall kann das Optikelement 8 und das Bilderzeugungsmodul 5 im linken Brillenbügel B2 angeordnet werden. Des Weiteren kann die Anzeigevorrichtung 1 so ausgebildet sein, dass Informationen bzw. virtuelle Bilder über beide Brillengläser 3, 4 eingespiegelt werden. Dabei kann die Einspiegelung so erfolgen, dass ein dreidimensionaler Bildeindruck entsteht. Dies ist jedoch nicht zwingend notwendig.

Die Brillengläser 3, 4 können eine Brechkraft von Null oder eine von Null verschiedene Brechkraft (insbesondere zur Korrektur von Fehlsichtigkeiten) aufweisen. Wie in den Figuren gezeigt ist, sind sowohl die Vorderseite 18 als auch die Rückseite 15 des Brillenglases 3 gekrümmt ausgebildet. Die Vorderseite 18 kann insbesondere sphärisch gekrümmt sein. Wenn das Brillenglas eine von Null verschiedene Brechkraft aufweist, um eine Fehlsichtigkeit zu korrigieren, ist in der Regel die Krümmung der Rückseite 15 entsprechend gewählt, um die entsprechende Korrektur zu erreichen. Die Rückseite 15 kann eine von der sphärischen Form abweichende Krümmung aufweisen, insbesondere also asphärisch geformt sein.

Die Haltevorrichtung 2 muss nicht als brillenartige Haltevorrichtung ausgebildet sein. Es ist auch jede andere Art der Haltevorrichtung möglich, mit der ein Aufsetzen oder Tragen der Anzeigevorrichtung auf dem Kopf des Benutzers erfolgen kann.

## Patentansprüche

1. Anzeigevorrichtung mit
einer auf den Kopf eines Benutzers aufsetzbaren Haltevorrichtung (2),
einem an der Haltevorrichtung befestigten Bilderzeugungsmodul (5), das ein Bild erzeugt, und einer an der Haltevorrichtung (2) befestigten Abbildungsoptik (7),
die das erzeugte Bild im auf den Kopf aufgesetzten Zustand der Haltevorrichtung (2) so abbildet, dass es der Benutzer als virtuelles Bild in Überlagerung mit der Umgebung wahrnehmen kann,
wobei die Abbildungsoptik (7) ein Optikelement (8) und ein Brillenglas (3, 4) umfasst,
wobei das Optikelement (8) eine erste Eintrittsfläche (F1) und eine gekrümmte Austrittsfläche (F3) aufweist,
wobei das Brillenglas (3, 4) eine gekrümmte zweite Eintrittsfläche (F4) und einen davon beabstandeten Auskoppelabschnitt (13) sowie eine gekrümmte Vorderseite (18) und eine gekrümmte Rückseite (15) aufweist,
wobei die Abbildungsoptik (7) das erzeugte Bild als virtuelles Bild abbildet, indem das Optikelement (8) die über die erste Eintrittsfläche (F1) dem Optikelement (8) zugeführten Lichtbündel (9) bis zur gekrümmten Austrittsfläche (F3) führt, von dieser über die gekrümmte zweite Eintrittsfläche (F4) in das Brillenglas (3, 4) einkoppelt, in dem sie durch Reflexionen und/oder innere Totalreflexionen bis zum Auskoppelabschnitt (13) geführt und mittels des Auskoppelabschnitts (13) über die gekrümmte Rückseite (15) zur Erzeugung des virtuellen Bildes ausgekoppelt werden, so dass das Optikelement (8) als erstes Abbildungselement und das Brillenglas (3, 4) als zweites Abbildungselement genutzt werden,
**dadurch gekennzeichnet, dass**
die gekrümmte Austrittsfläche (F3) mit der gekrümmten zweiten Eintrittsfläche (F4) so verbunden ist, dass die gekrümmte Austrittsfläche (F3) mit der gekrümmten zweiten Eintrittsfläche (F4) in direktem Kontakt steht, und
dass zur Reduzierung des Farbquerfehlers bei der Abbildung des virtuellen Bildes die beiden Abbildungselemente (3, 4; 8) aus unterschiedlichen Materialien hergestellt sind, eines der beiden Abbildungselemente (3, 4; 8) positive Brechkraft und das andere der beiden Abbildungselemente (3, 4; 8) negative Brechkraft für die Abbildung des virtuellen Bildes aufweist.

2. Anzeigevorrichtung nach Anspruch 1, bei der das Brillenglas (3, 4) negative Brechkraft und das Optikelement (8) positive Brechkraft aufweist und das Brillenglas (3, 4) eine kleinere Abbesche Zahl als das Optikelement (8) aufweist.

3. Anzeigevorrichtung nach Anspruch 1 oder 2, wobei beide Abbildungselemente (3, 4; 8) aus Kunststoffmaterialien hergestellt sind.

4. Anzeigevorrichtung nach einem der obigen Ansprüche, bei der der Auskoppelabschnitt (13) eine oder mehrere reflektive Umlenkflächen (14) aufweist, die reflektiv oder teilreflektiv sind.

5. Anzeigevorrichtung nach Anspruch 4, bei der die eine oder mehreren reflektiven Umlenkflächen (14) im Brillenglas (3, 4) vergraben sind.

6. Anzeigevorrichtung nach einem der obigen Ansprüche, bei der die Abbildungsoptik (7) das virtuelle Bild so erzeugt, dass es in Überlagerung mit der durch das Brillenglas (3, 4) sichtbaren Umgebung wahrnehmbar ist.

7. Anzeigevorrichtung nach einem der obigen Ansprüche, wobei das Brillenglas (3, 4) aus Polycarbonat und das Optikelement (8) aus Zeonex hergestellt ist.

8. Anzeigevorrichtung nach einem der obigen Ansprüche, wobei die gekrümmte Austrittsfläche (F3) des Optikelements (8) mit der gekrümmten zweiten Eintrittsfläche (F4) des Brillenglases (3, 4) verkittet ist.

9. Anzeigevorrichtung nach einem der obigen Ansprüche, wobei die gekrümmte Austrittsfläche (F3) des Optikelements (8) eine komplementäre Form zur gekrümmten zweiten Eintrittsfläche (F4) des Brillenglases (3, 4) aufweist.

10. Anzeigevorrichtung nach einem der obigen Ansprüche, wobei die gekrümmte Austrittsfläche (F3) des Optikelements (8) sphärisch gekrümmt ist.

11. Anzeigevorrichtung nach einem der obigen Ansprüche, wobei das Optikelement (8) zusammen mit dem Brillenglas (3, 4) L-förmig angeordnet sind.

12. Anzeigevorrichtung nach einem der obigen Ansprüche, bei der die Haltevorrichtung (2) brillenartig ausgebildet und einen ersten und zweiten Brillenbügel (B1, B2) aufweist, wobei das Optikelement (8) zumindest teilweise in einem der beiden Brillenbügel (B1, B2) angeordnet ist.

## Claims

1. Display device with
a holding device (2) which can be placed on the head of a user,
an imaging module (5) attached to the holding device, which generates an image
and an imaging optics (7) attached to the holding device (2),
which, when the holding device (2) is placed on the head, images the generated image in such a way that the user can perceive it as a virtual image superimposed on the surroundings,
wherein the imaging optics (7) comprises an optical element (8) and a spectacle lens (3, 4),
wherein the optical element (8) has a first entrance surface (F1) and a curved exit surface (F3),
wherein the spectacle lens (3, 4) has a curved second entrance surface (F4) and an output coupling section (13) spaced therefrom as well as a curved front surface (18) and a curved rear surface (15),
wherein the imaging optics (7) images the generated image as a virtual image in that the optical element (8) guides the light beams (9) fed to the optical element (8) via the first entry surface (F1) to the curved exit surface (F3), couples them from the latter via the curved second entry surface (F4) into the spectacle lens (3, 4) in that they are guided by reflections and/or total internal reflections as far as the output coupling section (13) and are coupled out by means of the output coupling section (13) via the curved rear side (15) to generate the virtual image, so that the optical element (8) is used as the first imaging element and the spectacle lens (3, 4) is used as the second imaging element,
**characterised in that**
the curved exit surface (F3) is connected to the curved second entrance surface (F4) in such a way that the curved exit surface (F3) is in direct contact with the curved second entrance surface (F4), and
**in that**, in order to reduce the lateral chromatic aberration in the imaging of the virtual image, the two imaging elements (3, 4; 8) are made of different materials, one of the two imaging elements (3, 4; 8) has positive refractive power and the other of the two imaging elements (3, 4; 8) has negative refractive power for the imaging of the virtual image.

2. Display device according to claim 1, wherein the spectacle lens (3, 4) has negative refractive power and the optical element (8) has positive refractive power and the spectacle lens (3, 4) has a smaller Abbe number than the optical element (8).

3. Display device according to claim 1 or 2, wherein both imaging elements (3, 4; 8) are made of plastic materials.

4. Display device according to one of the preceding claims, wherein the decoupling section (13) comprises one or more reflective deflecting surfaces (14) which are reflective or partially reflective.

5. Display device according to claim 4, wherein the one or more reflective deflecting surfaces (14) are buried in the spectacle lens (3, 4).

6. Display device according to any one of the preceding claims, wherein the imaging optics (7) generate the virtual image such that it is perceptible in superposition with the environment visible through the spectacle lens (3, 4).

7. Display device according to one of the above claims, wherein the spectacle lens (3, 4) is made of polycarbonate and the optical element (8) is made of Zeonex.

8. Display device according to one of the preceding claims, wherein the curved exit surface (F3) of the optical element (8) is cemented to the curved second entrance surface (F4) of the spectacle lens (3, 4).

9. Display device according to one of the preceding claims, wherein the curved exit surface (F3) of the optical element (8) has a complementary shape to the curved second entrance surface (F4) of the spectacle lens (3, 4).

10. Display device according to one of the preceding claims, wherein the curved exit surface (F3) of the optical element (8) is spherically curved.

11. Display device according to one of the preceding claims, wherein the optical element (8) together with the spectacle lens (3, 4) are arranged in an L-shape.

12. Display device according to one of the preceding claims, in which the holding device (2) is of spectacle-like design and has first and second spectacle arms (B1, B2), the optical element (8) being arranged at least partially in one of the two spectacle arms (B1, B2).

## Revendications

1. Dispositif d'affichage comprenant
un dispositif de support (2) pouvant être placé sur la tête d'un utilisateur,
un module de formation d'image (5) fixé au dispositif de maintien, qui forme une image,
et une optique d'imagerie (7) fixée au dispositif de maintien (2),
qui reproduit l'image générée lorsque le dispositif de maintien (2) est placé sur la tête, de telle sorte que l'utilisateur peut la percevoir comme une image virtuelle en superposition avec l'environnement,
l'optique d'imagerie (7) comprenant un élément optique (8) et un verre de lunettes (3, 4),
l'élément optique (8) présentant une première surface d'entrée (F1) et une surface de sortie incurvée (F3),
le verre de lunettes (3, 4) présentant une deuxième surface d'entrée incurvée (F4) et une section de couplage de sortie (13) espacée de celle-ci ainsi qu'une face avant incurvée (18) et une face arrière incurvée (15),
l'optique d'imagerie (7) reproduisant l'image générée sous forme d'image virtuelle, en ce que l'élément optique (8) guide les faisceaux lumineux (9) amenés à l'élément optique (8) par la première surface d'entrée (F1) jusqu'à la surface de sortie courbe (F3), les injecte de celle-ci dans le verre de lunettes (3, 4) par la deuxième surface d'entrée courbe (F4), dans lequel elles sont guidées par des réflexions et/ou des réflexions totales internes jusqu'à la section de découplage (13) et découplées au moyen de la section de découplage (13) via la face arrière courbe (15) pour produire l'image virtuelle, de sorte que l'élément optique (8) est utilisé comme premier élément d'imagerie et le verre de lunettes (3, 4) comme deuxième élément d'imagerie,
**caractérisé en ce que**
la surface de sortie incurvée (F3) est reliée à la deuxième surface d'entrée incurvée (F4) de telle sorte que la surface de sortie incurvée (F3) est en contact direct avec la deuxième surface d'entrée incurvée (F4), et
**en ce que**, pour réduire l'erreur transversale de couleur lors de la représentation de l'image virtuelle, les deux éléments d'imagerie (3, 4 ; 8) sont fabriqués dans des matériaux différents, l'un des deux éléments d'imagerie (3, 4 ; 8) présente une puissance de réfraction positive et l'autre des deux éléments d'imagerie (3, 4 ; 8) présente une puissance de réfraction négative pour la représentation de l'image virtuelle.

2. Dispositif d'affichage selon la revendication 1, dans lequel le verre de lunettes (3, 4) présente un pouvoir réfringent négatif et l'élément optique (8) un pouvoir réfringent positif, et le verre de lunettes (3, 4) présente un nombre d'Abbe inférieur à celui de l'élément optique (8).

3. Dispositif d'affichage selon la revendication 1 ou 2, dans lequel les deux éléments d'imagerie (3, 4 ; 8) sont fabriqués en matériaux plastiques.

4. Dispositif d'affichage selon l'une quelconque des revendications ci-dessus, dans lequel la section de découplage (13) comprend une ou plusieurs surfaces de renvoi réfléchissantes (14) qui sont réfléchissantes ou partiellement réfléchissantes.

5. Dispositif d'affichage selon la revendication 4, dans lequel les une ou plusieurs surfaces de déviation réfléchissantes (14) sont enfouies dans le verre de lunettes (3, 4).

6. Dispositif d'affichage selon l'une quelconque des revendications ci-dessus, dans lequel l'optique d'imagerie (7) génère l'image virtuelle de manière à ce qu'elle puisse être perçue en superposition avec l'environnement visible à travers le verre de lunettes (3, 4).

7. Dispositif d'affichage selon l'une quelconque des revendications ci-dessus, dans lequel le verre de lunettes (3, 4) est fabriqué en polycarbonate et l'élément optique (8) est fabriqué en Zeonex.

8. Dispositif d'affichage selon l'une des revendications ci-dessus, dans lequel la surface de sortie incurvée (F3) de l'élément optique (8) est mastiquée avec la deuxième surface d'entrée incurvée (F4) du verre de lunettes (3, 4).

9. Dispositif d'affichage selon l'une quelconque des revendications ci-dessus, dans lequel la surface de sortie incurvée (F3) de l'élément optique (8) présente une forme complémentaire à la deuxième surface d'entrée incurvée (F4) du verre de lunettes (3, 4).

10. Dispositif d'affichage selon l'une quelconque des revendications ci-dessus, dans lequel la surface de sortie incurvée (F3) de l'élément optique (8) est incurvée de manière sphérique.

11. Dispositif d'affichage selon l'une des revendications ci-dessus, dans lequel l'élément optique (8) est disposé en forme de L avec le verre de lunettes (3, 4).

12. Dispositif d'affichage selon l'une des revendications ci-dessus, dans lequel le dispositif de maintien (2) est conçu comme des lunettes et présente une première et une deuxième branches de lunettes (B1, B2), l'élément optique (8) étant disposé au moins partiellement dans l'une des deux branches de lunettes (B1, B2).
